# EUROPEAN PATENT APPLICATION

(11) **EP 2 366 995 A1**
(43) Date of publication of application: **21.09.2011**
(21) Application number: 11250235.6
(22) Date of filing: 01.03.2011
(51) Int. Cl.: G01N 27/49, G01N 33/00

(54) **Amperometric sensor**

(30) Priority: 01.03.2010 US 714575
(71) Applicant: Hamilton Sundstrand Corporation, Windsor Locks, CT 06096-1010 (US)
(72) Inventor: Carney, Kenneth, Rancho Cucamonga, California 91737 (US)
(74) Representative: Tomlinson, Kerry John

(57) **Abstract**

A carbon monoxide sensor (10) includes a housing (12) providing an analyte inlet. Multiple electrodes (18,20,22) are arranged in the housing and include a sensing electrode (18) in communication with the analyte inlet. The sensing electrode includes a catalytic material (34) niobium that is configured to oxidize carbon monoxide. Output elements (28) are connected to the electrodes and are configured to provide a carbon monoxide signal in response to an analyte reacting with the sensing electrode.

## Description

### BACKGROUND

This disclosure relates to an amperometric sensor suitable for sensing carbon monoxide in a hydrogen-rich environment, for example.

Amperometric electrochemical sensors are a class of toxic gas sensors in which an electrochemical cell comprising an electrolyte solution and two or more electrodes are used to oxidize or reduce a target analyte. In one example, the analyte may be carbon monoxide. The quantity of analyte transported to the electrode is limited by a diffusion or permeation membrane so that the analyte transport to the electrode, and thus the electric current, is proportional to the analyte concentration in the air. In one type of sensor, a potentiostat circuit is used to poise the electrode potential at a level chosen to maximize selectivity for the target analyte.

Undesired cross-sensitivity toward non-target analytes exists in amperometric sensors. For example, some types of sensors exhibit a 50% cross-sensitivity toward hydrogen. In other words, the sensor has the same response to 100 ppm hydrogen as 50 ppm carbon monoxide. Said another way, the sensor has a selectivity of 2 for carbon monoxide versus hydrogen. Some amperometric sensors employ modified potentiostats to improve the selectivity of carbon monoxide in a hydrogen environment.

A catalytic unit has been proposed for use in fuel cells to oxidize or remove undesired carbon monoxide in the fuel stream, which is harmful to the fuel cell catalyst. In one example, a platinum/niobium mixture is applied to an aluminum oxide substrate to oxidize or remove the undesired carbon monoxide before the carbon monoxide reaches the fuel cell catalyst.

### SUMMARY

A carbon monoxide sensor is disclosed that includes a housing providing an analyte inlet. Multiple electrodes are arranged in the housing and include a sensing electrode in communication with the analyte inlet. The sensing electrode includes a catalytic material having niobium that is configured to oxidize carbon monoxide. Output elements are connected to the electrodes and are configured to provide a carbon monoxide signal in response to an analyte reacting with the sensing electrode.

In one application, the carbon monoxide sensor is in communication with a controller that is programmed to determine an amount of analyte in response to the signal. An output device is in communication with the controller and is configured to provide an output based upon the amount. The sensor is arranged in a fuel stream that provides fuel to a fuel cell catalyst, for example, to sense the amount of carbon monoxide being supplied to the fuel cell catalyst.

A method of sensing carbon monoxide is provided using the carbon monoxide sensor, which includes providing a catalytic material on at least one electrode of the sensor having multiple electrodes. A current is output from the electrode and corresponds to a presence of carbon monoxide. The catalytic material is at least thirty times more responsive to carbon monoxide than hydrogen.

### BRIEF DESCRIPTION OF THE DRAWINGS

The disclosure can be further understood by reference to the following detailed description when considered in connection with the accompanying drawings wherein:
Figure 1 is a schematic view of an example carbon monoxide sensor.
Figure 2 is a schematic view of an example electrode including a catalytic material having niobium for use in the sensor shown in Figure 1.
Figure 3 is a schematic view of a fuel cell installation using the carbon monoxide sensor illustrated in Figure 1.

### DETAILED DESCRIPTION

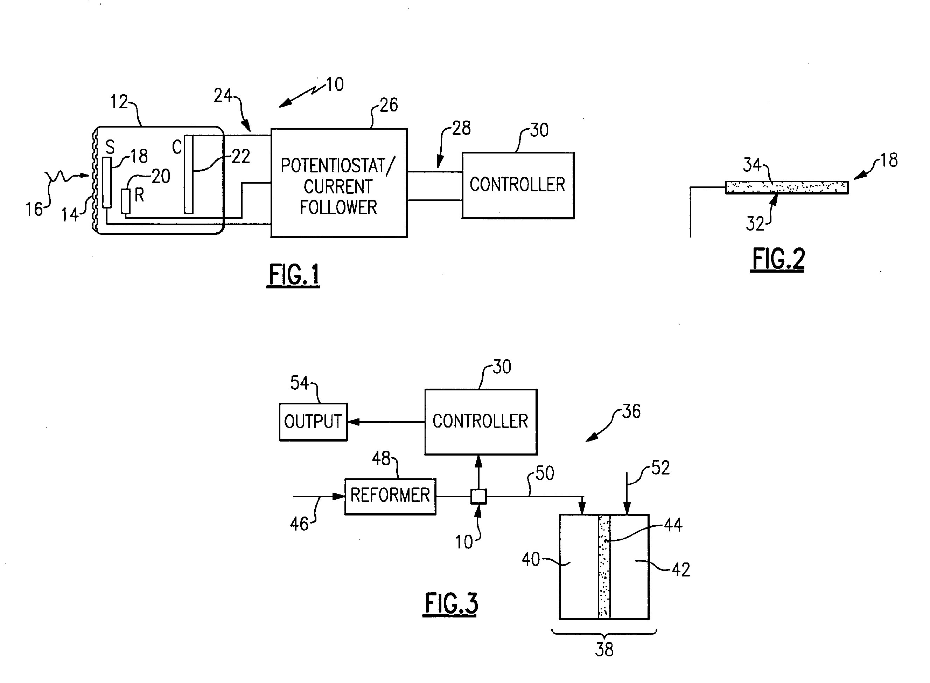

An amperometric sensor 10 is schematically illustrated in Figure 1. The sensor 10 includes a housing 12 having a barrier 14 providing an analyte inlet. The barrier 14 may be a porous diffusion membrane or capillary barrier, for example. Multiple electrodes, in the example, are arranged within the housing 12 and provide a current or signal indicative of an amount of analyte 16 in a surrounding environment. An amperometric sensor can include two or more electrodes configured in any number of ways. In the example sensor 10, sensor, reference, and counter electrodes 18, 20, 22 provide the current, via output elements 24, to a potentiostat 26. The potentiostat 26 is calibrated to provide an accurate indication of the target analyte 16, which in the example is carbon monoxide. A voltage from the potentiostat 26 is sent via sensor output elements 28 to a controller 30, which is programmed to determine from the signal the amount of carbon monoxide.

Referring to Figure 2, a sensor electrode 18 is shown that includes a support 32. In the example, the support 32 is a conductive material. A catalytic material 34 is provided on the support 32 to provide a high selectivity of carbon monoxide in a hydrogen-rich environment. The support 32 and catalytic material 34 may be integrated with one another. In one example, the support 32 and/or catalytic material includes a nonconductive material, such as alumina (A1203). In one example, the selectivity of the catalytic material 34 for carbon monoxide in the presence of hydrogen is at least thirty times more responsive to carbon monoxide than to hydrogen. In one example, the catalytic material 34 is a paste containing niobium. In one example, the catalytic material 34 includes less than 20% niobium and approximately 1% platinum by weight. The sensor 10 accurately detects carbon monoxide concentrations below 500 ppm in the presence of over 60% hydrogen.

The sensor 10 with the niobium-based catalytic material is suitable for use in a fuel cell installation 36 as illustrated in Figure 3. The fuel cell installation 36 includes a cell 38 having an anode 40 receiving fuel from a fuel flow path 50. A fuel source 46, such as natural gas, passes through a reformer 48 to provide hydrogen to the anode 40. The cell 38 includes a electrolyte 44 provided between the anode 40 and a cathode 42, which receives an oxidant, such as air, from an oxidant source 52. The electrolyte 44 oxidizes the fuel and reduces the oxidant to produce electricity resulting from a chemical reaction, as is known. It is desirable for the fuel within the fuel flow path 50 to be free of carbon monoxide, which can poison the electrolyte 44, reducing its efficiency. To monitor the carbon monoxide content within the fuel flow path 50, the sensor 10 is arranged within the fuel flow path 50. The sensor 10 communicates with the controller 30, as described above to determine an amount of carbon monoxide within the fuel flow path 50. If the amount of carbon monoxide reaches or exceeds a predetermined amount, which may correspond to a carbon monoxide level that would adversely effect the operation of the electrolyte 44, an output is provided to an output device 54. The output may correspond to an alarm, printout or display, for example.

Although an example embodiment has been disclosed, a worker of ordinary skill in this art would recognize that certain modifications would come within the scope of the claims. For that reason, the following claims should be studied to determine their true scope and content.

## Claims

1. A carbon monoxide sensor (10) comprising:
a housing (12) providing an analyte inlet;
multiple electrodes (18,20,22) arranged in the housing, including a sensing electrode (18) in communication with the analyte inlet and having a catalytic material (34) including niobium; and
output elements (28) connected to the electrodes and configured to provide a signal in response to an analyte (16) reacting with the sensing electrode.

2. The sensor according to claim 1, wherein the catalytic material is configured to oxidise carbon monoxide and the signal is a current that corresponds to an amount of carbon monoxide.

3. The sensor according to claim 1 or 2, wherein the catalytic material includes a mixture of platinum and niobium.

4. The sensor according to claim 3 wherein the mixture is a paste.

5. The sensor according to claim 3 or 4, wherein the mixture is provided on a conductive substrate (32) of the sensing electrode.

6. The sensor according to claim 3, 4 or 5, wherein the mixture includes less than 20% niobium and approximately 1% platinum by weight.

7. The sensor according to any preceding claim, wherein the catalytic material is at least thirty times more responsive to carbon monoxide than to hydrogen.

8. A carbon monoxide sensing system comprising:
a carbon monoxide sensor according to any preceding claim;
a controller (30) in communication with the output elements and programmed to determine an amount of analyte in response to the signal; and
an output device (54) in communication with the controller and configured to provide an output based upon the amount.

9. The system according to claim 8, further comprising:
a fuel cell (36) including an electrolyte (44) provided between an anode (40) and a cathode (42); and
a fuel flow path (50) fluidly connected to the anode,
wherein the sensing electrode is in fluid communication with the fuel flow path.

10. A method of sensing carbon monoxide comprising:
providing a catalytic material (34) on at least one electrode (18) of a sensor having multiple electrodes (18,20,22); and
outputting a current from the electrodes corresponding to a presence of carbon monoxide, wherein the catalytic material is at least thirty times more responsive to carbon monoxide than to hydrogen.

11. The method according to claim 10, wherein the catalytic material includes a paste supported on a conductive substrate (32) of an electrode.

12. The method according to claim 10 or 11, wherein the catalytic material includes niobium.

13. The method according to claim 12, wherein the catalytic material includes a mixture of platinum and niobium.

14. The method according to claim 13, wherein the mixture includes less than 20% niobium and approximately 1% platinum by weight.

15. The method according to any of claims 11 to 14, comprising the step of receiving the current in a potentiostat and outputting an indication of an amount of carbon monoxide in response to the current.
